(19) Europäisches Patentamt
European Patent Office
Office européen des brevets

(11) Veröffentlichungsnummer: **0 235 729 B1**

(12) **EUROPÄISCHE PATENTSCHRIFT**

(45) Veröffentlichungstag der Patentschrift: **19.12.90**

(51) Int. Cl.[5]: **C09B 62/25**, D06P 1/382

(21) Anmeldenummer: **87102584.7**

(22) Anmeldetag: **24.02.87**

(54) **Reaktivfarbstoffe.**

(30) Priorität: **04.03.86 DE 3606921**
**24.05.86 DE 3617513**

(43) Veröffentlichungstag der Anmeldung:
**09.09.87 Patentblatt 87/37**

(45) Bekanntmachung des Hinweises auf die Patenterteilung:
**19.12.90 Patentblatt 90/51**

(84) Benannte Vertragsstaaten:
**CH DE FR GB LI**

(56) Entgegenhaltungen:
**EP-A- 0 014 432**
**EP-A- 0 125 650**
**EP-A- 0 131 543**

(73) Patentinhaber: **BAYER AG,**
**D-5090 Leverkusen 1 Bayerwerk(DE)**

(72) Erfinder: **Jäger, Horst, Dr., Carl-Rumpff-Strasse 37,**
**D-5090 Leverkusen(DE)**
Erfinder: **Söll, Manfred, Dr., Dillinger Strasse 23,**
**D-5090 Leverkusen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Gegenstand der vorliegenden Erfindung sind neue metallfreie Azoreaktivfarbstoffe der Formel

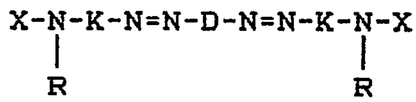

(I)

worin
K = Rest einer Kupplungskomponente der Naphthol-, Pyrazolon- oder Pyridonreihe,
D = Rest der Formel

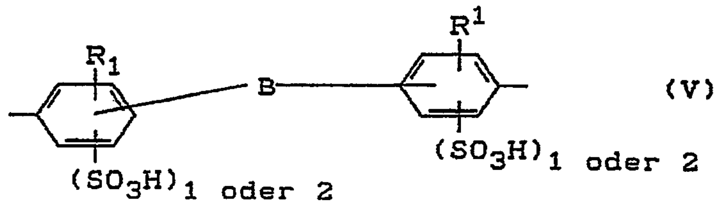

(V)

worin
$R_1$ = H, Cl, Br, $C_1$–$C_4$-Alkyl, $C_1$–$C_4$-Alkoxy, COOH, Acylamino; insbesondere $-NHCOCH_3$,
B = direkte Bindung oder Brückenglied –NH–, –O–, $-(CH_2)_{1-2}$, –CH=CH–, $-OCH_2CH_2O-$, –NR–W–NR– oder

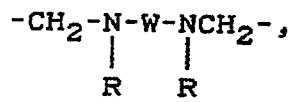

worin
W = –CO– oder Bis-acylrest, beispielsweise

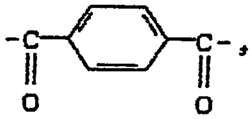, 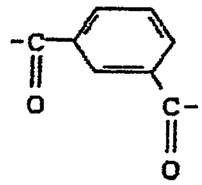, 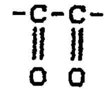,

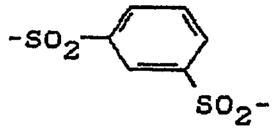,

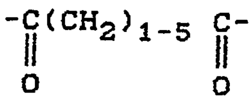, 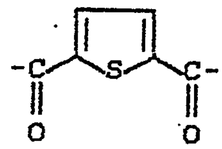, 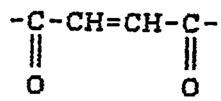

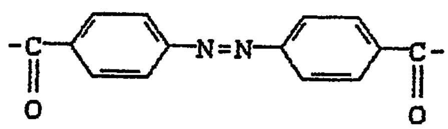, 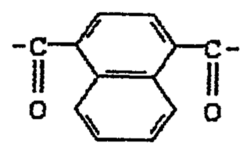,

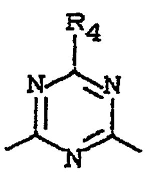

wobei
$R_4$ = F, Cl, Br, Alkoxy, insbesondere gegebenenfalls durch $C_1$–$C_4$-Alkoxy substituiertes $C_1$–$C_4$-Alkoxy, Aryloxy, insbesondere Phenoxy, $C_1$–$C_4$-Alkyl, gegebenenfalls substituiertes Amino, insbesondere $NH_2$, Mono- und Di-$C_1$–$C_4$-Alkylamino, Arylamino, insbesondere gegebenenfalls durch Cl, $C_1$–$C_4$-Alkyl, $C_1$–$C_4$-Alkoxy, Sulfo oder Carboxy substituiertes Phenylamino oder –N–$C_1$–$C_4$-Alkyl-N-arylamino, Hydroxy oder der Formel

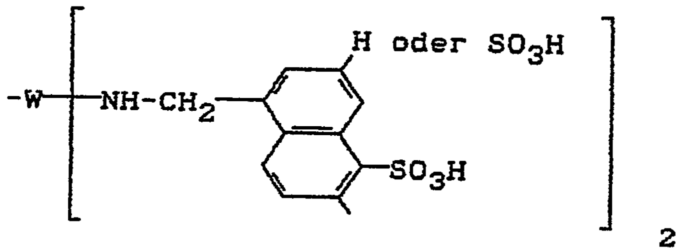 (Va)

worin
W die angegebene Bedeutung hat,
X = faserreaktiver Rest der Pyrimidinreihe, der mindestens ein reaktives Fluoratom enthält,
R = H, Alkyl, insbesondere gegebenenfalls substituiertes $C_1$–$C_4$-Alkyl, vorzugsweise $CH_3$.
Geeignete Reste –K– sind beispielsweise solche der Formeln:

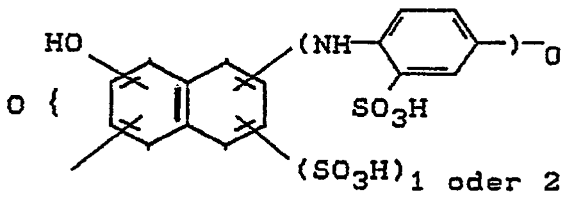

(II)

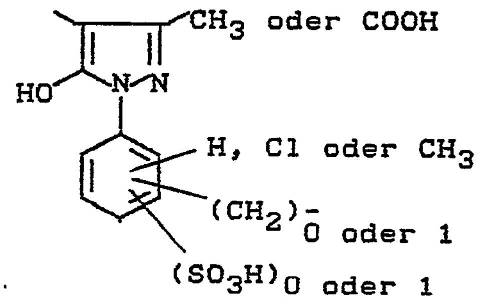

(III)

oder

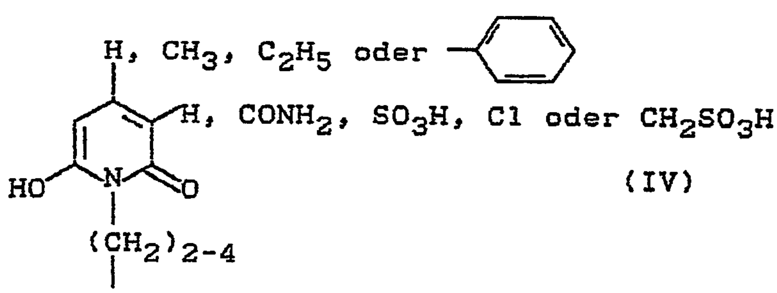

(IV)

Reste einer Reaktivkomponente der Pyrimidinreihe –X mit mindestens einem reaktiven Fluoratom sind beispielsweise solche der Formel

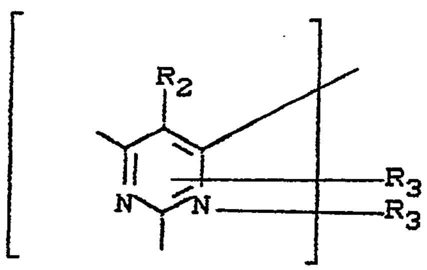

(VI)

$R_2$ = H, Halogen, gegebenenfalls substituiertes Alkyl, Alkenyl, $NO_2$, CN, Carbonsäure, Carbonsäureester – gegebenenfalls N-substituierte Carbonsäure- oder Sulfonsäureamidgruppe, Sulfonsäure- oder Sulfonsäureestergruppe, Alkylsulfonyl, Aralkylsulfonyl-, Arylsulfonylgruppe,
$R_3$ = H, Halogen, gegebenenfalls substituiertes Alkyl, Alkenyl, Alkylsulfonyl-, Aralkylsulfonyl- oder Arylsulfonylgruppe, mit der Maßgabe, daß mindestens ein $R_3$ = F.

Geeignete Substituenten $R_2$ in 5-Stellung des Pyrimidinringes sind beispielsweise: Halogen, wie Cl, Br und F, Alkylreste, wie $-CH_3$ und $-C_2H_5$, substituierte Alkylreste, wie Mono-, Di- oder Trichlor- oder Tribrommethyl-, Trifluormethyl-, Alkenyl-, wie Vinyl-, Halogenvinyl- und Allylreste.

Geeignete Substituenten $R_3$ des Pyrimidinringes sind beispielsweise: Halogen, wie Cl, Br und F, Alkyl-, wie Methyl- und Ethylreste, Alkenyl-, wie Vinyl-, Halogenvinyl- und Allylreste und substituierte Alkylreste, wie Mono-, Di- oder Trichlor- oder Tribrommethyl- oder Trifluormethylreste.

Besonders bevorzugte Reste K, D und X sind die folgenden:

Reste -K-:

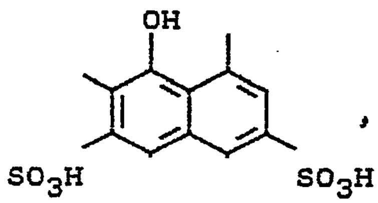 , 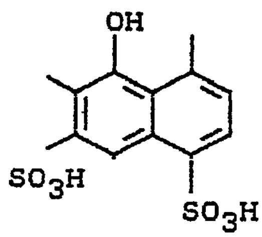 , 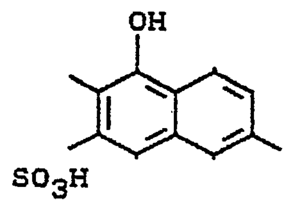 ,

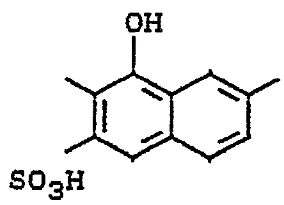 , 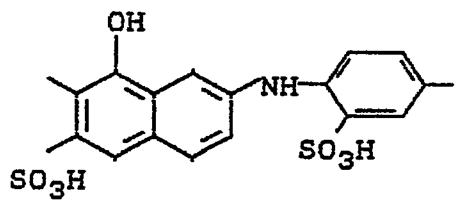 ,

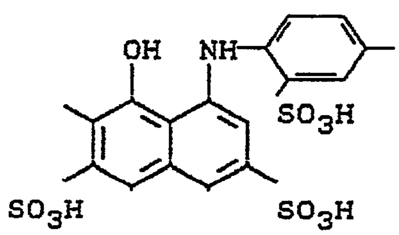

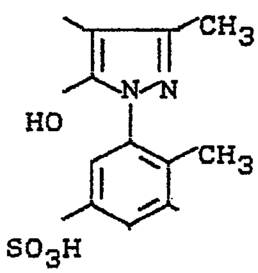 , 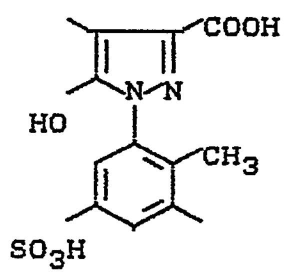 , 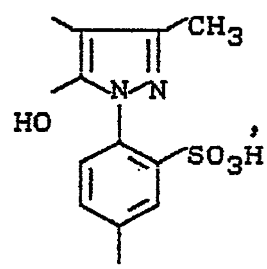 ,

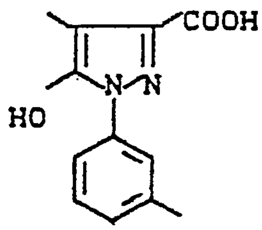 , 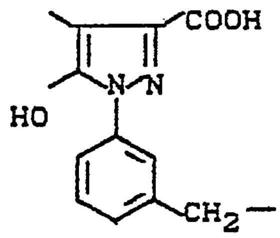 , 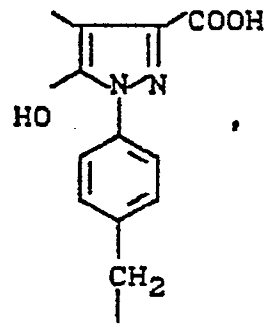 ,

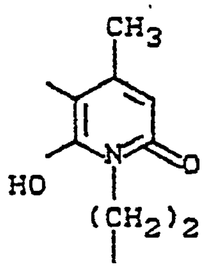 , 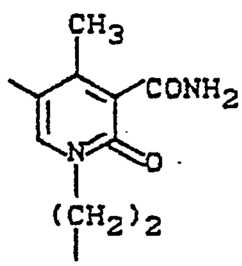 ,

Reste -D-:

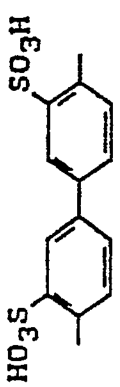,

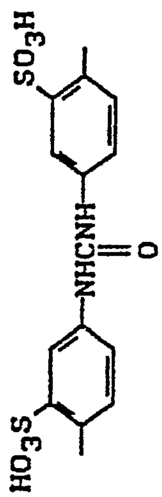,

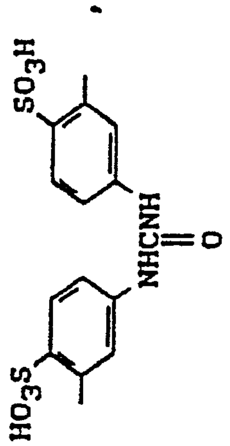,

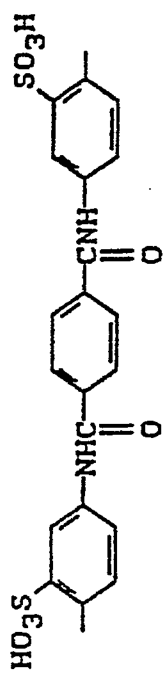,

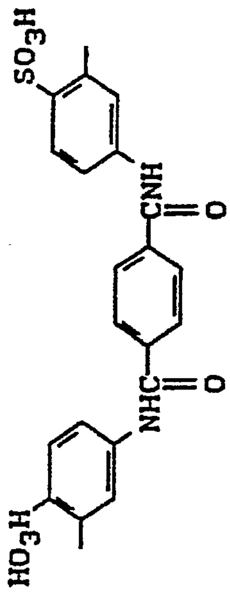,

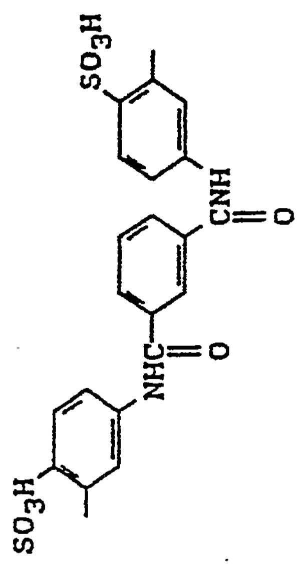,

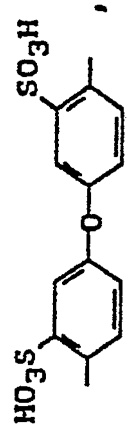,

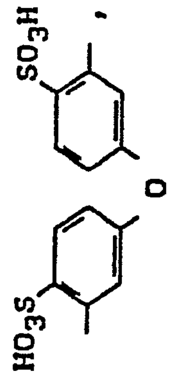

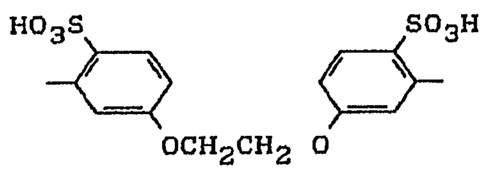

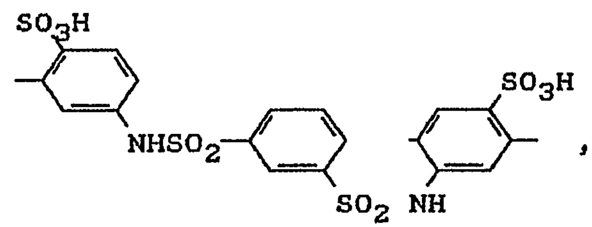

,

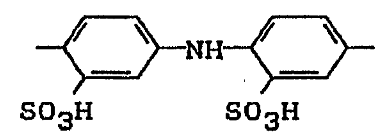

,

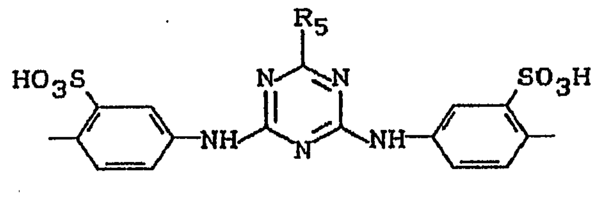

;

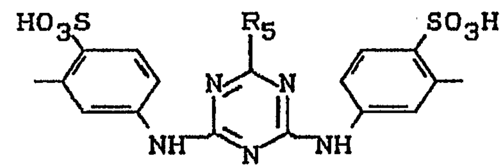

;

worin $R_5$ = Cl, F, $NH_2$, $OCH_3$, $OCH_2CH_2OCH_3$, 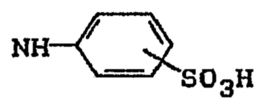 , $NHCH_2CH_2OH$, $N(CH_2CH_2OH)_2$

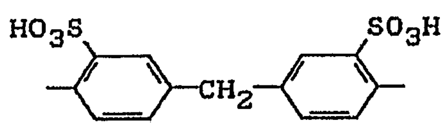

,

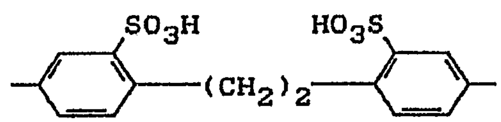

,

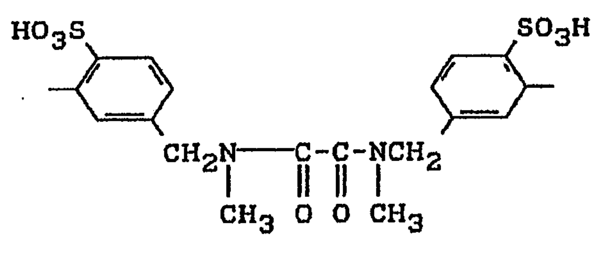

,

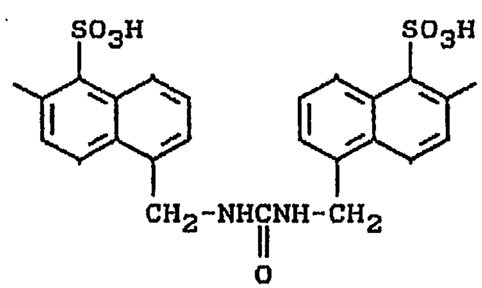

,

Reste X:

X = 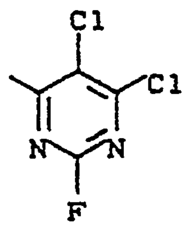 , 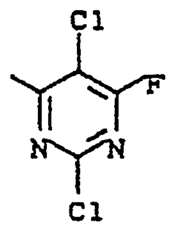 , 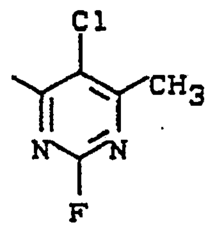 ,

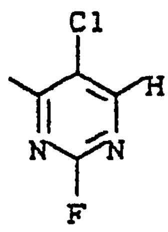 , 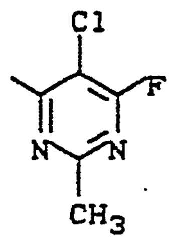 , 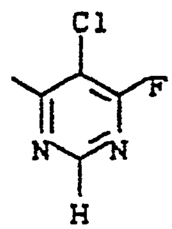 ,

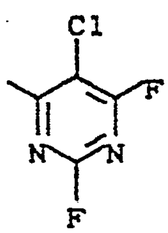 , 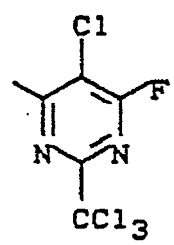

X = 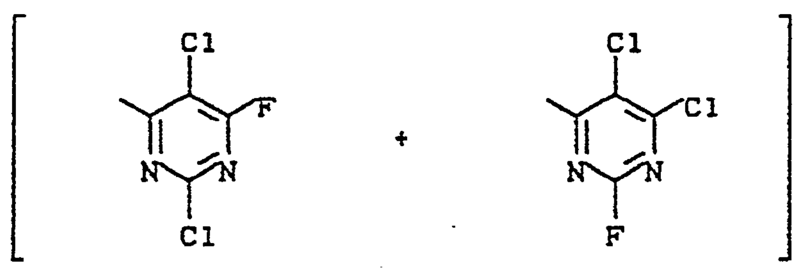
+

50-80 % 50-20%

Im Rahmen der Formel (I) sind folgende Farbstoffe bevorzugt:

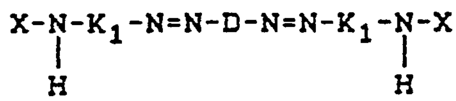

(VII)

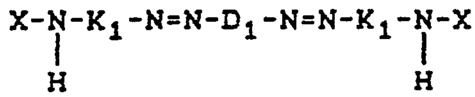

(VIII)

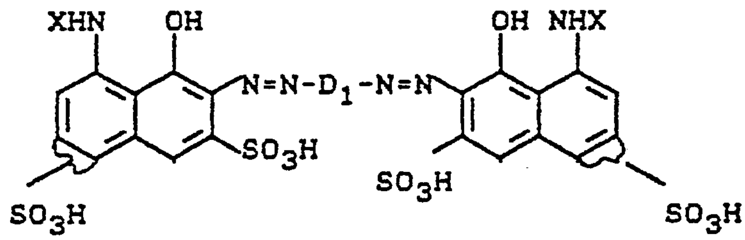

(IX)

worin $K_1$ = Rest der Formel (II) und
$D_1$ = Rest der Formel (V),

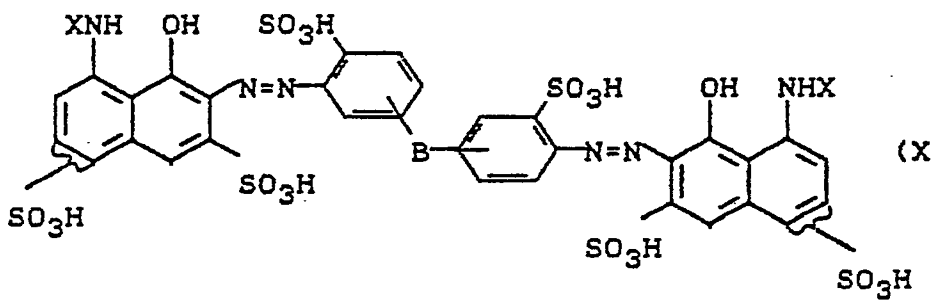

(X)

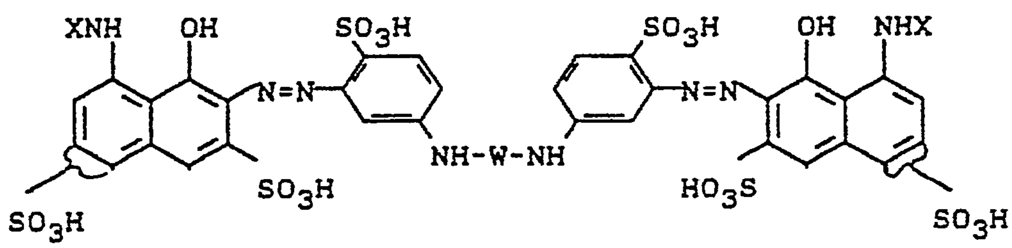

(XI)

insbesondere solche der Formel (XI), in denen

W= -CO-, 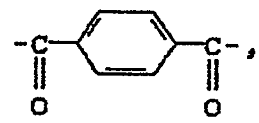, 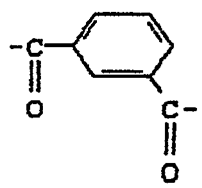, 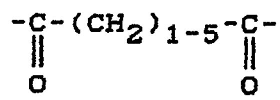

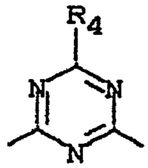

wobei
$R_4$ = F, Cl, Br, Alkoxy, insbesondere gegebenenfalls durch $C_1$–$C_4$-Alkoxy substituiertes $C_1$–$C_4$-Alkoxy, Aryloxy, insbesondere Phenoxy, $C_1$–$C_4$-Alkyl, gegebenenfalls substituiertes Amino, insbesondere $NH_2$, Mono- und Di-$C_1$–$C_4$-Alkylamino, Arylamino, insbesondere gegebenenfalls durch Cl, $C_1$–$C_4$-Alkyl, $C_1$–$C_4$-Alkoxy, Sulfo, Carboxy, substituiertes Phenylamino oder –N–$C_1$–$C_4$-Alkyl-N-arylamino, Hydroxy.

Besonders bevorzugt sind solche Farbstoffe der Formeln (I) und (VII) bis (XI), in denen

X = 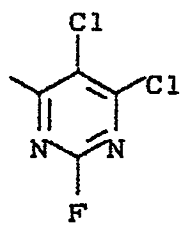, 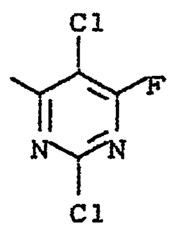, 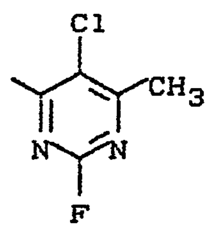,

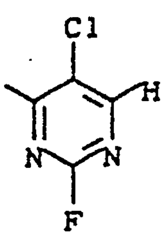, 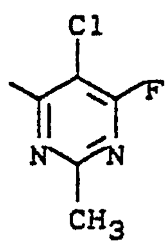, 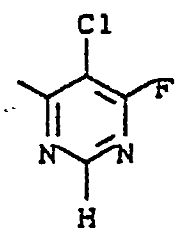,

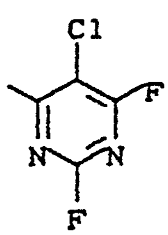, 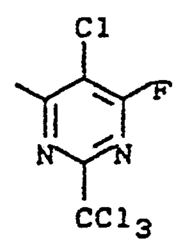

und insbesondere solche, in denen

X = 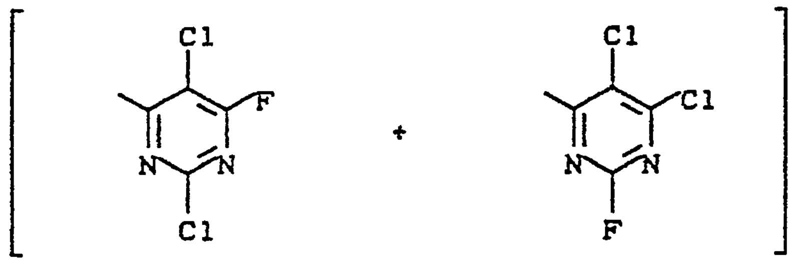

50-80 % 50-20%

Gegenstand der Erfindung sind weiterhin Verfahren zur Herstellung der Farbstoffe der Formel (I).

Im einzelnen sind folgende Varianten zu erwähnen:

a) Ein Diamin der Formel

$H_2N-D-NH_2$ (XII)

wird tetrazotiert und mit einer Kupplungskomponente der Formel

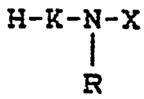 (XIII)

in schwach sauren bis schwach alkalischen Milieu vereinigt. Verbindungen der Formel (XIII) erhält man durch Acylierung einer Kupplungskomponente der Formel

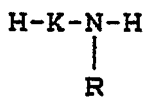 (XIV)

mit einer Reaktivkomponente der Formel

F–X (F = Fluor) (XV)

b) Ein Mol eines Diaminodiazofarbstoffs der Formel

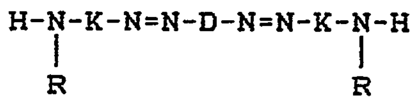 (XVI)

wird mit zwei Mol einer Reaktivkomponente der Formel (XV) acyliert.

c) Ein Aminoazofarbstoff der Formel

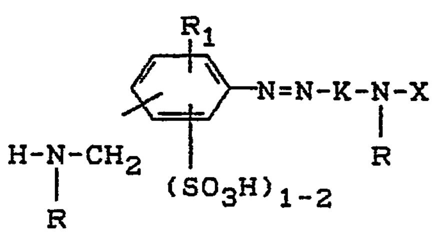 (XVII)

wird durch Phosgenierung oder Acylierung mit einem Bisacylchlorid der Formel

Cl–W–Cl (XVIII)

zu einem Farbstoff der Formel (I) verdoppelt.

Die Reaktionsbedingungen der Herstellung entsprechen den auf dem Gebiet der Phosgenierung, Acylierung, Diazotierung und Kupplung üblichen Bedingungen. So erfolgt die Herstellung vorzugsweise im wäßrigen Medium.

Als Ausgangsverbindungen zur Herstellung der Reaktivfarbstoffe der Formel (I) können beispielsweise genannt werden:

a) Diamine der Formel (XII)

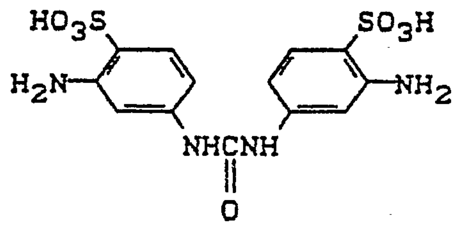

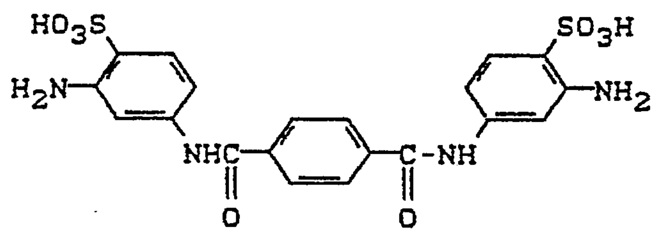

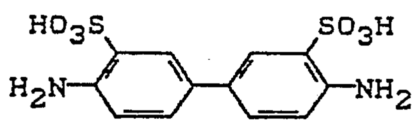

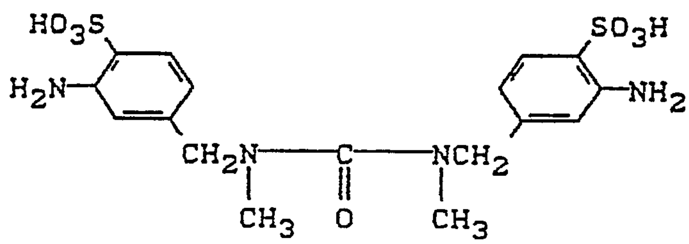

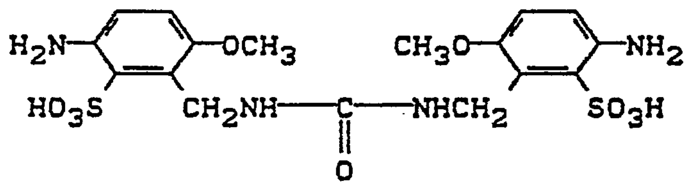

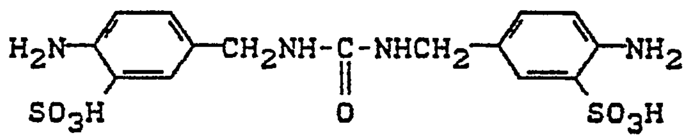

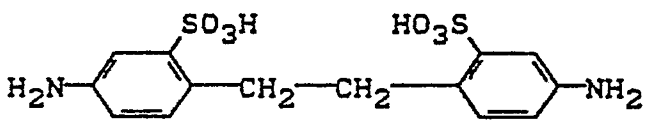

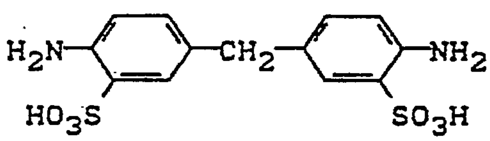

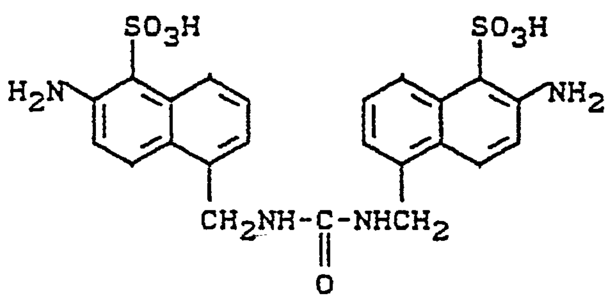

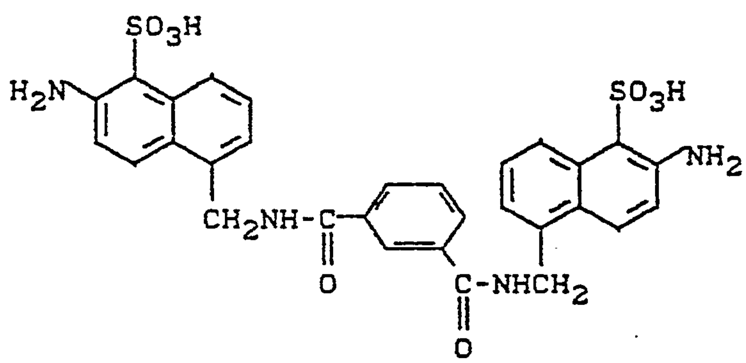

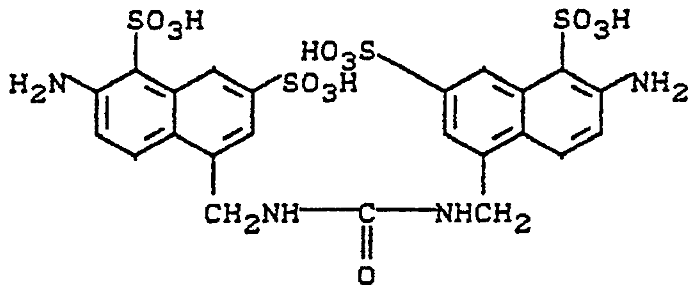

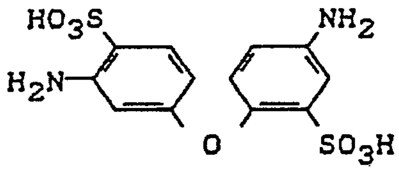

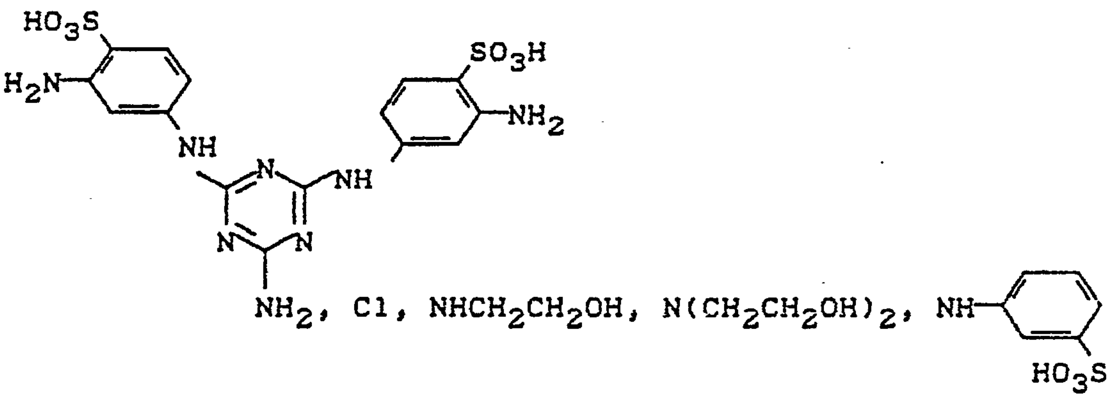

b) Kupplungskomponenten der Formel (XIV)
1-Amino-8-hydroxynaphthalin-3,6-disulfonsäure,
1-Amino-8-hydroxynaphthalin-4,6-disulfonsäure,
2-Amino-5-hydroxynaphthalin-7-sulfonsäure,
2-Amino-8-hydroxynaphthalin-6-sulfonsäure,
1-(4′-Amino-2′-sulfophenylamino)-8-hydroxynaphthalin-3,6-disulfonsäure,
1-(4′-Amino-2′-sulfophenylamino)-8-hydroxynaphthalin-4,6-disulfonsäure,
2-(4′-Amino-2′-sulfophenylamino)-8-hydroxynaphthalin-6-sulfonsäure,
1-(3′-Aminophenyl)-3-carboxy-pyrazolon-5-,
1-(4′-Amino-2′-sulfophenyl)-3-carboxy-pyrazolon-5,
1-(4′-N-Methylaminomethylphenyl)-3-carboxy-pyrazolon-5,
1-(3′-N-Methylaminomethylphenyl)-3-carboxy-pyrazolon-5-,
1-(2′-Methyl-3′-amino-5′-sulfophenyl)-3-methyl-pyrazolon-5,
1-β-Aminoethyl-4-methyl-6-hydroxy-pyridon-2,
1-β-Aminoethyl-3-carbamoyl-4-methyl-6-hydroxy-pyridon-2.

c) Bisacylchloride der Formel (XVIII)
Oxalsäuredichlorid, Bernsteinsäuredichlorid, Fumarsäuredichlorid, Terephthalsäuredichlorid, Isophthalsäuredichlorid, 2,5-Bischlorcarbonyl-thiophen, Cyanurchlorid, 2-Amino-4,6-dichlortriazin, 2-Methoxy-4,6-dichlortriazin, 2-(3′-Sulfophenylamino)-4,6-dichlortriazin, 2-(2′-Sulfophenylamino)-4,6-difluortriazin.

d) Pyrimidine der Formel (XV)
2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Di-fluor-4-brompyrimidin, 2,4,6-Trifluor-5-brompyrimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin,

2,4,6-Trifluor-5-methyl-pyrimidin, 2,4-Difluor-5-nitro-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluor-pyrimidin, 5-Trifluormethyl-2,4,6-trifluorpyrimidin, 2,4-Difluor-5-nitro-pyrimidin, 2,4-Difluor-5-trifluor-methylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbon-amido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonyl-pyrimidin, 2,4-Difluor-5-chlor-6-carbomethoxypyrimidin, 5-Trifluormethyl-2,4-difluorpyrimidin, 4,6-Difluor-5-chlorpyrimidin, 4,6-Difluor-5-trifluormethylpyrimidin, 4,6-Difluor-2-methyl-pyrimidin, 4,6-Difluor-5-chlor-2-methyl-pyrimidin, 4,5,6-Trifluor-pyrimidin, 4,6-Difluor-5-chlor-2-trifluormethyl-pyrimidin, 4,6-Difluor-2-phenyl-pyrimidin, 4,6-Difluor-5-cyan-pyrimidin, 4,6-Difluor-5-nitro-pyrimidin, 4,6-Difluor-5-methylsulfonyl-pyrimidin, 4,6-Difluor-5-phenylsulfonyl-pyrimidin, 2,4-Difluor-6-fluordichlormethyl-pyrimidin, 2,4-Difluor-5-chlor-6-fluordichlormethyl-pyrimidin, 2,4-Difluor-5-chlor-6-dichlormethyl-pyrimidin, 2,4-Difluor-5-brom-6-dichlormethyl-pyrimidin, 2,4-Difluor-5-chlor-6-trichlormethyl-pyrimidin, 2-Fluordichlormethyl-4,6-difluor-5-chlorpyrimidin, 2-Fluordichlormethyl-4,6-difluor-pyrimidin, 2-Fluorchlormethyl-4,6-difluor-5-chlor-pyrimidin, 2-Fluorchlormethyl-4,6-difluor-pyrimidin, 2-Difluorchlormethyl-4,6-difluor-5-chlor-pyrimidin, 2-Difluorchlormethyl-4,6-difluor-pyrimidin, 2-Fluordichlormethyl-4,5,6-trifluorpyrimidin, 2-Difluorchlormethyl-4,5,6-trifluorpyrimidin, 2-Difluorchlormethyl-4,5,6-trifluor-pyrimidin, 2-Trifluormethyl-4,5,6-trifluor-pyrimidin, 5-Methylsulfonyl-2,4,6-trifluor-pyrimidin, 5-Methylsulfonyl-2-methyl-4,6-difluor-pyrimidin, 2,4,5-Trifluor-6-methylsulfonyl-pyrimidin, 2,4-Difluor-5-chlor-6-methylsulfonyl-pyrimidin, 2,4,6-Trifluor-5-methylsulfonyl-pyrimidin, 2,4,6-Trifluor-5-ethoxyethyl-sulfonyl-pyrimidin, 2,4,6-Trifluor-5-benzylsulfonyl-pyrimidin, 2,4-Dichlor-6-fluor-5-methylsulfonyl-pyrimidin, 2-Chlor-4,6-difluor-5-methylsulfonyl-pyrimidin, 2-Chlor-4,6-dibrom-5-methylsulfonyl-pyrimidin, 2-Brom-4,6-difluor-5-methylsulfonyl-pyrimidin. 2-Chlor-4,6-difluor-5-ethylsulfonyl-pyrimidin, 2-Chlormethyl-4,6-difluor-5-chlorpyrimidin, 2-Dichlormethyl-4,6-difluor-5-chlorpyrimidin, 2-Trichlormethyl-4,6-difluor-5-chlorpyrimidin, 2-Trichlormethyl-4,6-difluor-pyrimidin.

Die Reaktivfarbstoffe der Formel (I) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe, herstellen.

Die Reaktivfarbstoffe der Formel (I) zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen.

Die Reaktivfarbstoffe der Formel (I) eignen sich zum Färben und Bedrucken der verschiedensten beispielsweise Hydroxylgruppen- oder Amidgruppen enthaltenden Substrate, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

In der EP 014 432 werden faserreaktive Disazofarbstoffe des Typs

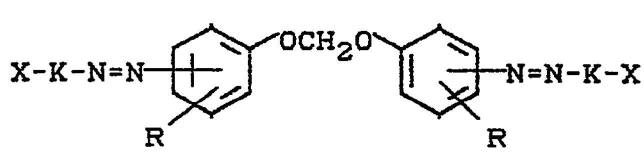

mit

X = $SO_2CH_2CH_2OSO_3H$ oder Monochlortriazinylrest

K = Kupplungskomponente
R = H oder $NO_2$
beschrieben, die zum Färben von hydroxylgruppen- und carbonamidgruppenhaltigen Materialien geeignet sind.

Beispiel 1

31,9 g 1-Amino-8-hydroxynaphthalin-3,6-disulfonsäure (H-Säure) werden in 150 ml Wasser bei pH 10 gelöst. Man kühlt auf 10° ab und läßt in 30 Minuten 18,5 g eines Gemisches aus 70% 4,6-Difluor-2,5-dichlor-pyrimidin und 30% 2,4-Difluor-5,6-dichlor-pyrimidin eintropfen und hält dabei den pH-Wert durch fortlaufende Zugabe von 10%iger Natriumhydroxidlösung bei 10. Man rührt 30 Minuten bei pH 10 nach und prüft dann auf nicht umgesetzte H-Säure. Gegebenenfalls muß noch 0,5 bis 1 g des Gemisches der Reaktivkomponenten nachgesetzt werden.

Anschließend stellt man mit verdünnter Salzsäure auf pH 7 und setzt 28 g Natriumhydrogencarbonat zu. 20,1 g 3,3'-Diamino-diphenylharnstoff-4,4'-disulfonsäure werden mit Natronlauge in 300 ml Wasser neutral gelöst. Nach der Zugabe von 7 g $NaNO_2$ tropft man die neutrale Lösung in eine Vorlage 200 ml Wasser und 28 ml konz. Salzsäure bei 10–15° ein. Nach halbstündigem Nachrühren wird der Überschuß an Nitrit mit Amidosulfonsäure entfernt. Die Suspension der Tetrazoverbindung läßt man in die Lösung der acylierten H-Säure einlaufen. Nach beendeter Kupplung wird auf pH 6,5 gestellt und der Farbstoff durch Zugabe von 20 Volumen% Kochsalz ausgesalzen. Nach dem Absaugen, Trocknen bei 70° im Vakuumtrockenschrank und Mahlen erhält man ein dunkelrotes Farbstoffpulver, das sich leicht in Wasser mit roter Farbe löst. Nach einem der für Reaktivfarbstoffe üblichen Färbeverfahren erhält man auf Baumwolle kräftige blaustichig rote Färbungen (Farbkennzahl 8). Der Farbstoff entspricht der Formel

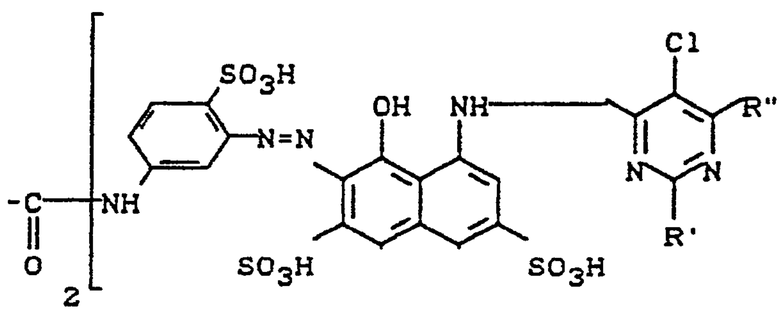

70 % R' = Cl, R" = F
30 % R' = F, R" = Cl

Weitere wertvolle Farbstoffe erhält man, wenn man nach den Angaben von Beispiel 1 verfährt und die in Spalte 2 aufgeführte Diaminoverbindung tetrazotiert und auf das Kondensationsprodukt kuppelt, das man durch Acylierung der in Spalte 3 genannten Kupplungskomponenten mit den in Spalte 4 erwähnten Reaktivkomponenten erhält.

| Beispiel | Diamin | Kupplungskomponente | Reaktivkomponente | Farbton | Farbkennzahl |
|---|---|---|---|---|---|
| 2 | 3,3'-Diamino-diphenyl-harnstoff-4,4'-disulfonsäure | 1-Amino-8-hydroxy-naphthalin-4,6-disulfonsäure | Gemisch aus 70 Teilen 4,6-Difluor-2,5-dichlor-pyrimidin und 30 Teilen 2,4-Difluor-5,6-dichlor-pyrimidin | rot | 8 |
| 3 | 4,4'-Diamino-diphenyl-harnstoff-3,3'-disulfonsäure | " | " | blaust. rot | 9 |
| 4 | 4,4'-Diamino-(1,1'-biphenyl)-3,3'-disulfonsäure | " | " | " | " |
| 5 | " | 1-Amino-8-hydroxy-naphthalin-3,6-disulfonsäure | " | " | " |
| 6 | 4,4'-Diamino-(1,1'-biphenyl)-2,2'-disulfonsäure | " | " | " | " |
| 7 | 4,4'-Diaminodibenzyl-2,2'-disulfonsäure | " | " | " | |
| 8 | 3,3'-Diamino-diphenyl-harnstoff-4,4'-disulfonsäure | " | 2,4-Difluor-5-chlor-6-methyl-pyrimidon | rot | 8 |
| 9 | " | " | 2-Methyl-4,6-difluor-5-Chlor-pyrimidin | " | " |

| Beispiel | Diamin | Kupplungskomponente | Reaktivkomponente | Farbton | Farbkennzahl |
|---|---|---|---|---|---|
| 10 | 3,3'-Diamino-diphenyl-harnstoff-4,4'-disulfonsäure | 1-Amino-8-hydroxy-naphthalin-3,6-disulfonsäure | 2,4-Difluor-5-chlor-pyrimidin | rot | 8 |
| 11 | " | " | 4,6-Difluor-5-chlor-pyrimidin | | " |
| 12 | " | " | 2-Fluordichlormethyl-4,6-difluor-5-chlor-pyrimidin | | " |
| 13 | " | " | 2-Dichlormethyl-4,6-difluor-5-chlor-pyrimidin | | " |
| 14 | " | " | 2-Trichlormethyl-4,6-difluor-5-chlor-pyrimidin | | " |
| 15 | " | " | 2-Trifluormethyl-4,6-difluor-5-chlor-pyrimidin | | " |
| 16 | " | 2-Amino-5-hydroxy-naphthalin-7-sulfonsäure | 2,4,6-Trifluor-5-chlor-pyrimidin | orange | 5 |
| 17 | " | " | Gemisch aus 70 Teilen 4,6-Difluor-2,5-dichlor-pyrimidin und 30 Teilen 2,4-Difluor-5,6-dichlor-pyrimidin | " | " |

| Beispiel | Diamin | Kupplungskomponente | Reaktivkomponente | Farbton | Farbkennzahl |
|---|---|---|---|---|---|
| 18 | 3,3'-Diamino-diphenyl-harnstoff-4,4'-disulfonsäure | 2-Amino-5-hydroxy-naphthalin-7-sulfonsäure | 2-Methyl-4,6-difluor-5-chlor-pyrimidin | orange | 5 |
| 19 | " | " | 6-Methyl-2,4-difluor-5-chlor-pyrimidin | " | " |
| 20 | 4,4'-Diamino-diphenyl-harnstoff-3,3'-disulfonsäure | " | 2,4,6-Trifluor-5-chlor-pyrimidin | gelbst. rot | 7 |
| 21 | " | 2-(4'-Amino-2'-sulfo-phenylamino)-8-hydroxy-naphthalin-6-sulfonsäure | " | braun | 24 |
| 22 | 2-Chlor-4,6-bis-(3'-amino-4'-sulfophenyl-amino)-triazin | 1-Amino-8-hydroxy-naphthalin-3,6-di-sulfonsäure | Gemisch aus 70 Teilen 4,6-Difluor-2,5-dichlor-pyrimidin und 30 Teilen 2,4-Difluor-5,6-dichlor-pyrimidin | rot | 8 |
| 23 | 2-Fluor-4,6-bis-(3'-amino 4'-sulfophenylamino)-triazin | " | " | rot | 8 |
| 24 | 2-Methoxyethoxy-4,6-bis-(3'-amino-4'-sulfophenyl-amino)-triazin | " | " | rot | 8 |

Beispiel 25

In eine Anschlämmung von 0,1 Mol des Farbstoffs der Formel

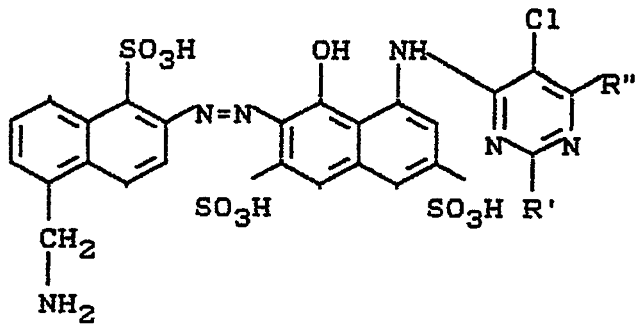

70 % R' = Cl, R" = F

30 % R' = F, R" = Cl

(der Farbstoff wird erhalten durch Kuppeln diazotierter 2-Amino-5-aminomethyl-naphthalin-1-sulfonsäure (Diazokomponente) im neutralen Medium auf das Kondensationsprodukt aus 1-Amino-8-hydroxynaphthalin-3,6-disulfonsäure (Kupplungskomponente) und dem Gemisch aus 70 Teilen 4,6-Difluor-2,5-dichlor-pyrimidin und 30 Teilen 2,4-Difluor-5,6-dichlor-pyrimidin (Reaktivkomponente)) in 1 l Wasser wird bei 5–8°C Phosgen eingeleitet, wobei durch gleichzeitige Zugabe von verdünnter Natronlauge ein pH von 8,3–8,6 eingehalten wird. Nach beendeter Phosgenierung wird der Farbstoff ausgesalzen, abgesaugt, getrocknet und gemahlen. Man erhält ein dunkelrotes Farbstoffpulver, das sich leicht mit roter Farbe in Wasser löst. Nach einem der für Reaktivfarbstoffe üblichen Färbeverfahren erhält man auf Baumwolle klare blaustichig rote Färbungen (Farbkennzahl 9).

Der Farbstoff entspricht der Formel

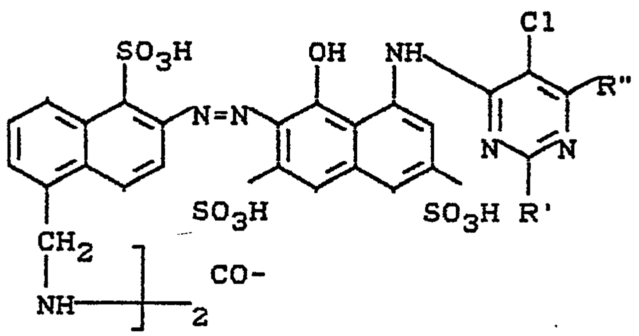

70 % R' = Cl, R" = F

30 % R' = F, R" = Cl

Weitere wertvolle Farbstoffe erhält man, wenn man nach den Angaben von Beispiel 28 verfährt und Aminoazofarbstoffe verwendet, die man durch Kuppeln der in Spalte 2 genannten Diazokomponenten auf die Acylierungsprodukte, die durch Acylierung der in Spalte 3 aufgeführten Kupplungskomponenten mit den in Spalte 4 erwähnten Reaktivkomponenten erhalten werden, herstellt.

| Beispiel | Diamin | Kupplungskomponente | Reaktivkomponente | Farbton | Farbkennzahl |
|---|---|---|---|---|---|
| 26 | 3-N-Methylaminomethyl-6-amino-benzol-1-sulfonsäure | 1-Amino-8-hydroxy-naphthalin-3,6-disulfonsäure | Gemisch aus 70 % 4,6-Difluor-2,5-dichlor-pyrimidin und 30 % 2,4-Difluor-5,6-dichlor-pyrimidin | gelbst. rot | 7 |
| | " | 1-Amino-8-hydroxy-naphthalin-4,6-disulfonsäure | " | " | " |
| 27 | 2-Amino-5-aminomethyl-naphthalin-1-sulfonsäure | " | " | rot | 8 |
| 28 | 1-Amino-3-aminomethyl-4-methoxy-benzol-2-sulfonsäure | " | " | blaust. rot | 9 |
| 29 | 1,4-Diamino-benzol-2,5-disulfonsäure | " | " | " | " |
| 30 | " | 2-Amino-5-hydroxy-naphthalin-7-sulfonsäure | 2,4,6-Trifluor-5-chlor-pyrimidin | gelbst. rot | 7 |

Beispiel 31

0,1 Mol des Farbstoffs der Formel

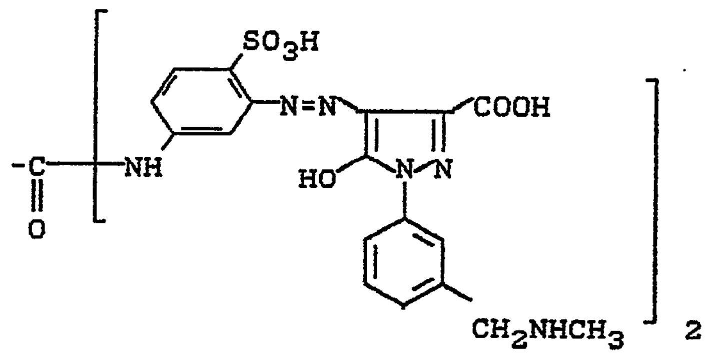

werden in 1 l Wasser angerührt. Bei 10° tropft man 0,2 Mol 2,4,6-Trifluor-5-chlor-pyrimidin ein und hält dabei durch gleichzeitige Zugabe von verdünnter Natronlauge den pH zwischen 8 und 8,5. Nach beendeter Kondensation wird der Farbstoff ausgesalzen. Nach dem Absaugen, Trocknen und Mahlen erhält man ein gelbes Farbstoffpulver, das sich leicht in Wasser mit gelber Farbe löst. Nach einem der für Reaktivfarbstoffe üblichen Applikationsverfahren erhält man damit auf Baumwolle kräftige gelbe Färbungen (Farbkennzahl 2).

Der Farbstoff entspricht der Formel

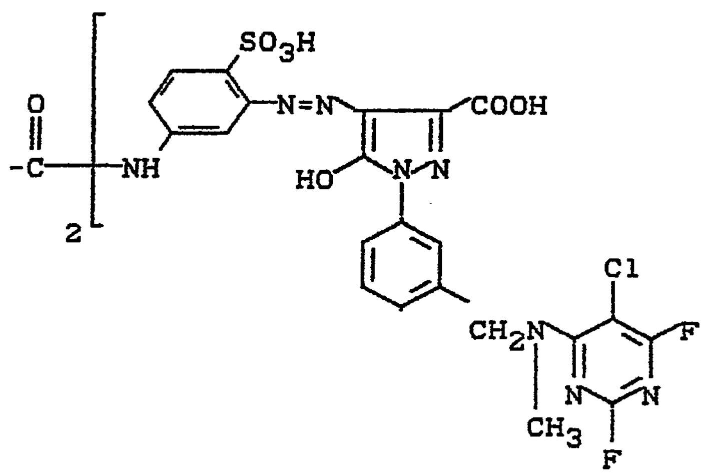

**Patentansprüche**

1. Metallfreie Azoreaktivfarbstoffe der Formel

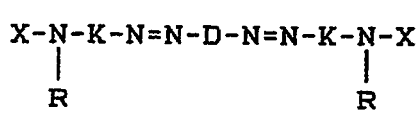

worin
K = Rest einer Kupplungskomponente der Naphthol-, Pyrazolon- oder Pyridonreihe,
D = Rest der Formel

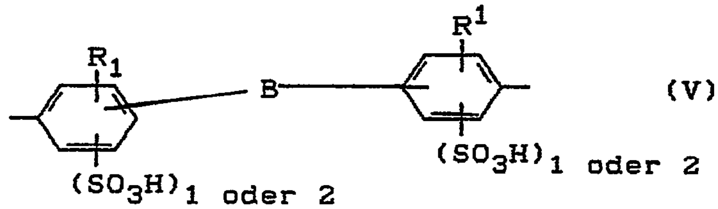

(V)

worin
$R_1$ = H, Cl, Br, $C_1$–$C_4$-Alkyl, $C_1$–$C_4$-Alkoxy, COOH, Acylamino; insbesondere $-NHCOCH_3$,
B = direkte Bindung, oder Brückenglied –NH–, –O–, $-(CH_2)-_{1-2}$, –CH=CH–, $-OCH_2CH_2O-$, –NR–W–NR– oder

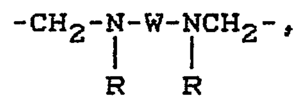

worin
W = –CO– oder ein Bis-acylrest, beispielsweise

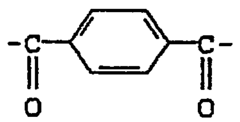 , 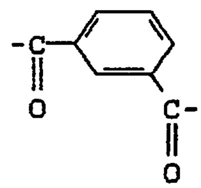 , 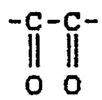 , 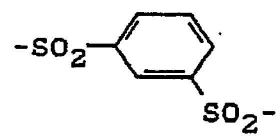

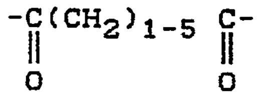 , 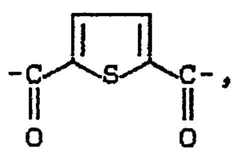 , 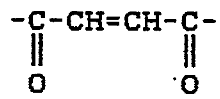

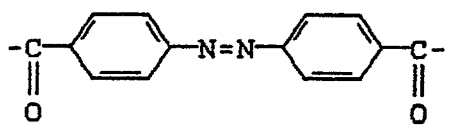 , 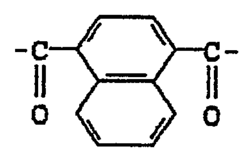 ,

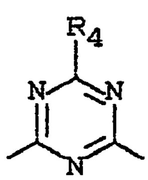

wobei
$R_4$ = F, Cl, Br, Alkoxy, insbesondere gegebenenfalls durch $C_1$–$C_4$-Alkoxy substituiertes $C_1$–$C_4$-Alkoxy, Aryloxy insbesondere Phenoxy, $C_1$–$C_4$-Alkyl, gegebenenfalls substituiertes Amino, insbesondere $NH_2$, Mono- oder Di-$C_1$–$C_4$-Alkylamino, Arylamino, insbesondere gegebenenfalls durch Cl, $C_1$–$C_4$-Alkyl, $C_1$–$C_4$-Alkoxy, Sulfo, Carboxy, substituiertes Phenylamino oder –N-$C_1$–$C_4$-Alkyl-N-arylamino, Hydroxy oder der Formel

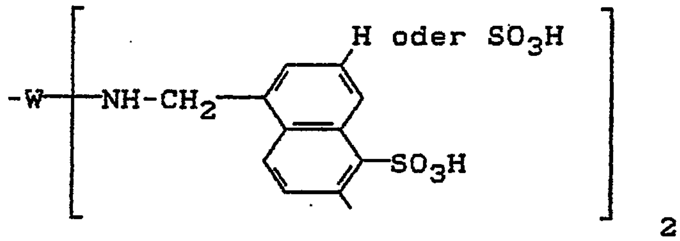

(Va)

worin
W die angegebene Bedeutung hat,
X = faserreaktiver Rest der Pyrimidinreihe, der mindestens ein reaktives Fluoratom enthält,
R = H, Alkyl.

2. Farbstoffe des Anspruchs 1 mit

-K- =

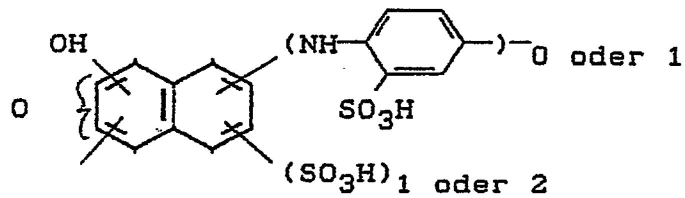

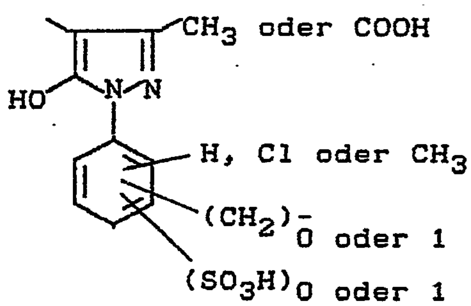

oder

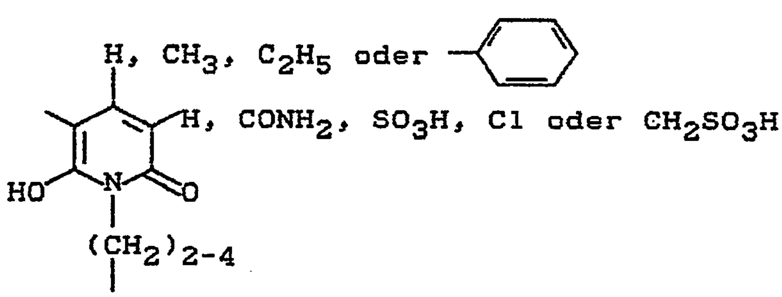

3. Farbstoffe des Anspruchs 1 mit R = H.

4. Farbstoffe des Anspruchs 1 der Formeln

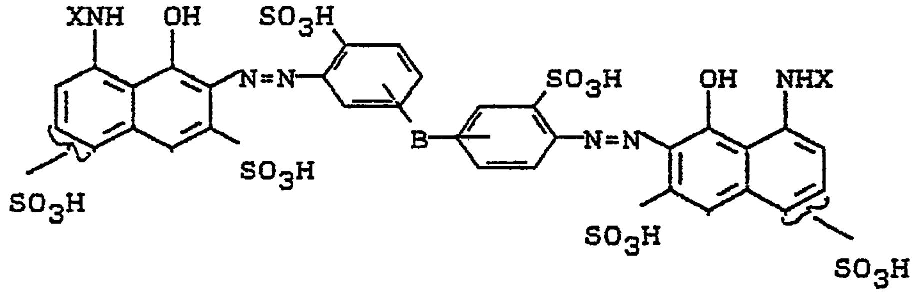

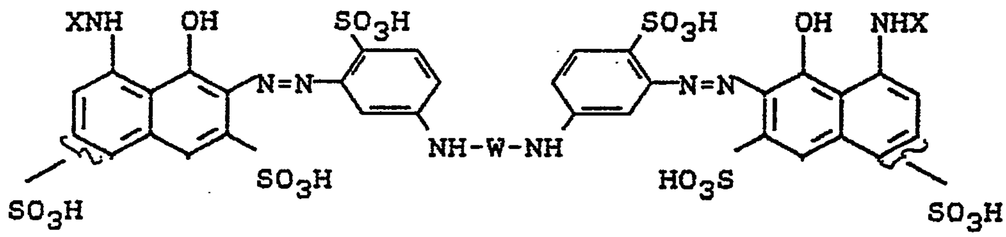

worin B und W die in Anspruch 1 angegebene Bedeutung haben.

5. Farbstoffe der Ansprüche 1 und 4 mit

W= -CO-, 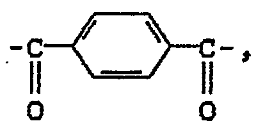, 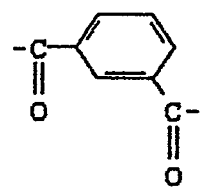, 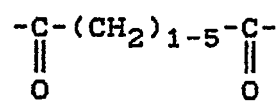

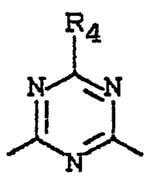,

wobei $R_4$ die in Anspruch 1 angegebene Bedeutung hat.

6. Farbstoffe der Ansprüche 1–5 mit

X = 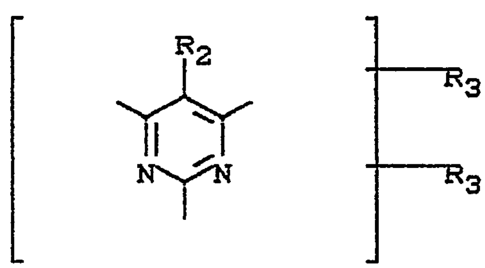

worin

$R_2$ = H, Halogen, gegebenenfalls substituiertes Alkyl, Alkenyl, $NO_2$, CN, Carbonsäure, Carbonsäureester – gegebenenfalls N-substituierte Carbonsäure- oder Sulfonsäureamidgruppe, Sulfonsäure- oder Sulfonsäureestergruppe, Alkylsulfonyl, Aralkylsulfonyl-, Arylsulfonylgruppe,

$R_3$ = H, Halogen, gegebenenfalls substituiertes Alkyl, Alkenyl, Alkylsulfonyl-, Aralkylsulfonyl- oder Arylsulfonylgruppe, mit der Maßgabe, daß mindestens ein $R_3$ = F.

7. Farbstoffe der Ansprüche 1–5 mit

X = 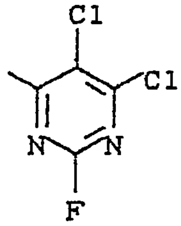 , 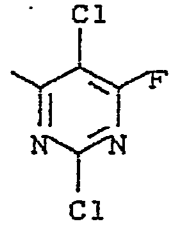 , 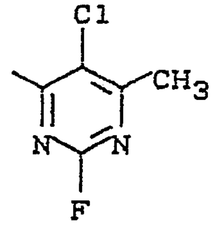 ,

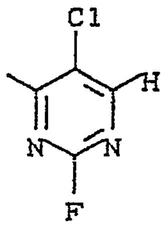 , 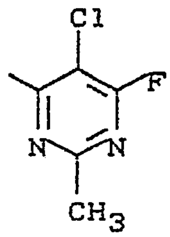 , 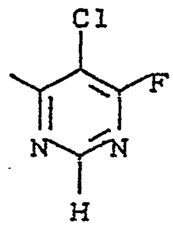 ,

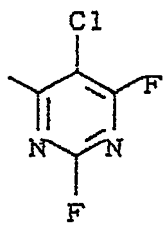 , 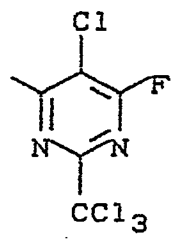

oder

X 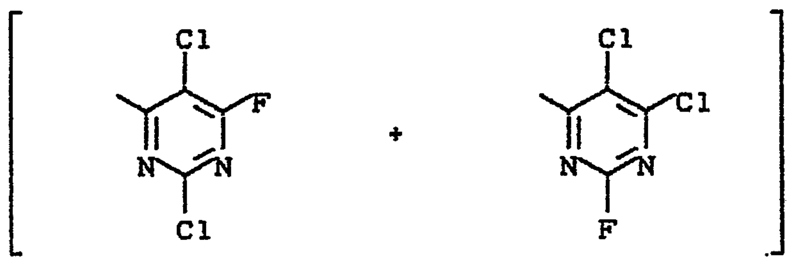

50-80 % 50-20%

8. Verwendung der Farbstoffe der Ansprüche 1–7 zum Färben und Bedrucken von hydroxylgruppen- oder amidgruppenhaltigen Materialien.

9. Mit den Farbstoffen der Ansprüche 1–8 gefärbte oder bedruckte hydroxylgruppen- oder amidgruppenhaltige Materialien.

**Claims**

1. Metal-free azoreactive dyestuffs of the formula

```
X-N-K-N=N-D-N=N-K-N-X
  |                 |
  R                 R
```

in which
K denotes the radical of a coupling component of the naphthol, pyrazolone or pyridone series,
D denotes the radical of the formula

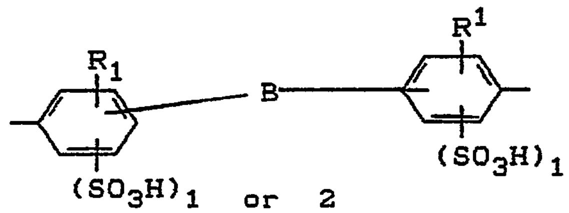

(V)

in which

$R_1$ denotes H, Cl, Br, $C_1$–$C_4$-alkyl, $C_1$–$C_4$-alkoxy, COOH, acylamino; in particular –$NHCOCH_3$,
B denotes a direct bond, or bridge member –NH–, –O–, –$(CH_2)_{1-2}$, –CH=CH–, –$OCH_2CH_2O$–, –NR–W–NR– or

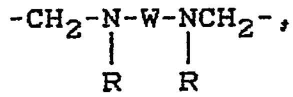

in which

W = –CO– or a bisacyl radical, for example

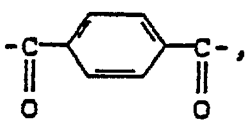 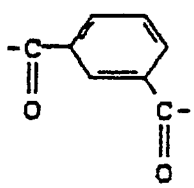 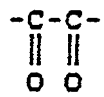 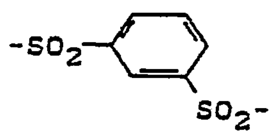

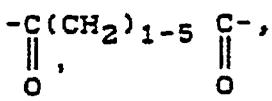 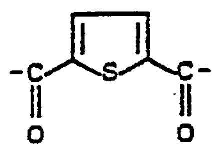 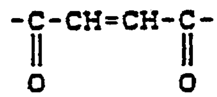

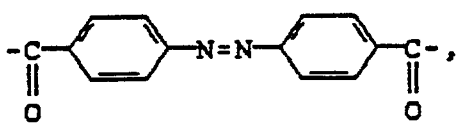 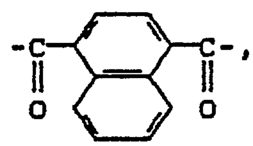

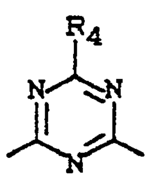

where

$R_4$ denotes F, Cl, Br, alkoxy, in particular optionally $C_1$–$C_4$-alkoxy-substituted $C_1$–$C_4$-alkoxy, aryloxy, in particular phenoxy, $C_1$–$C_4$-alkyl, optionally substituted amino, in particular $NH_2$, mono- and di-$C_1$–$C_4$-alkylamino, arylamino, in particular optionally Cl-, $C_1$–$C_4$-alkyl-, $C_1$–$C_4$-alkoxy-, sulpho-, carboxyl-substituted phenylamino or –N–$C_1$–$C_4$-alkyl-N-arylamino, hydroxyl
or of the formula

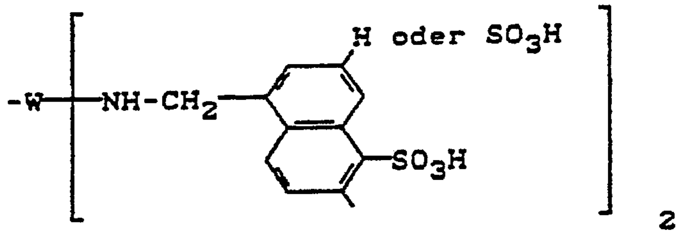

(Va)

in which
W has the specified meaning,
X denotes a fibre-reactive radical of the pyrimidine series which contains at least one reactive fluorine atom,
R denotes H or alkyl.

2. Dyestuffs of Claim 1 with

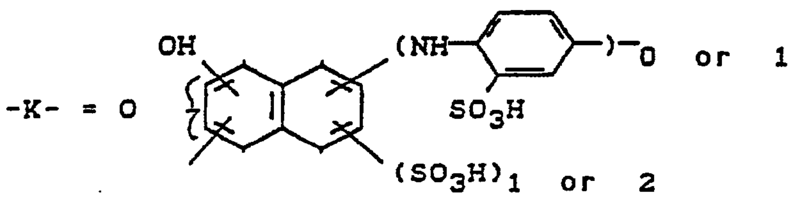

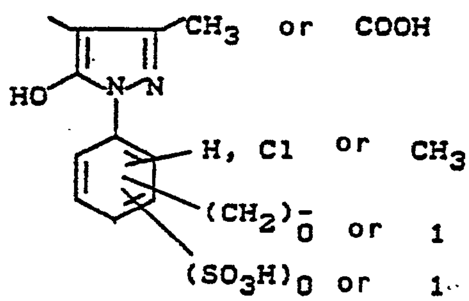

or

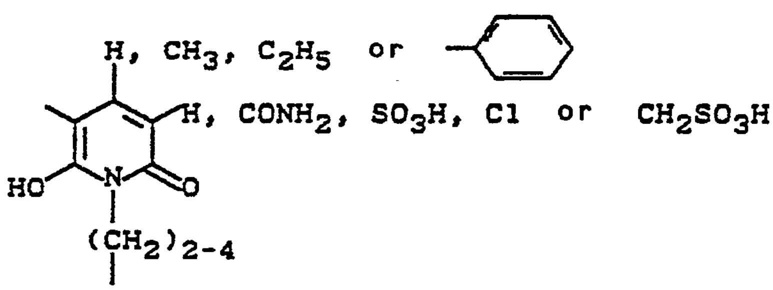

3. Dyestuffs of Claim 1 with R = H.

4. Dyestuffs of Claim 1 of the formulae

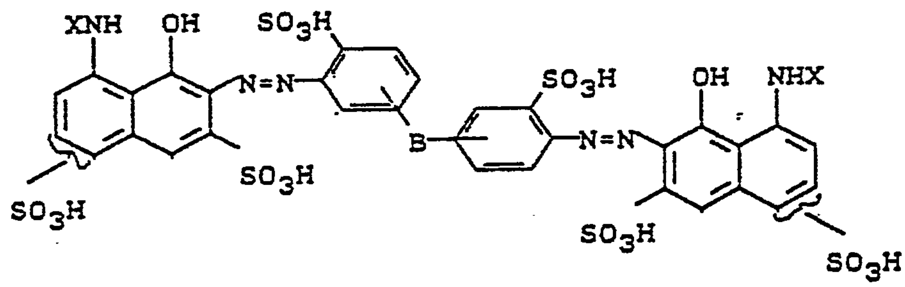

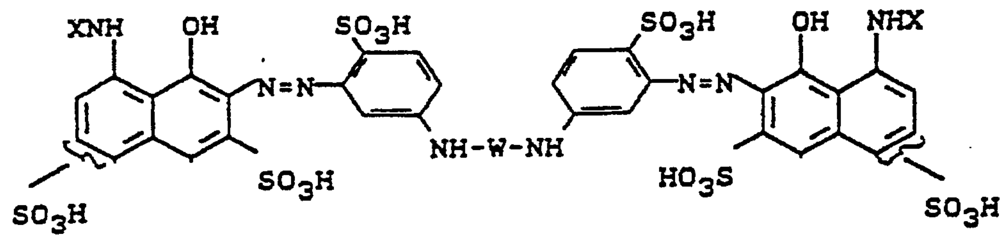

in which
B and W have the meaning indicated in Claim 1.

5. Dyestuffs of Claims 1 and 4 with

W= -CO-, 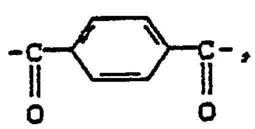, 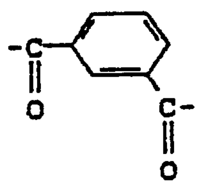, 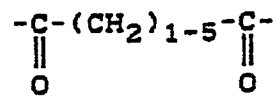

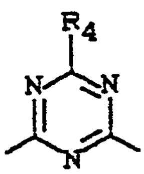,

where $R_4$ has the meaning indicated in Claim 1.

6. Dyestuffs of Claims 1–5 with

X = 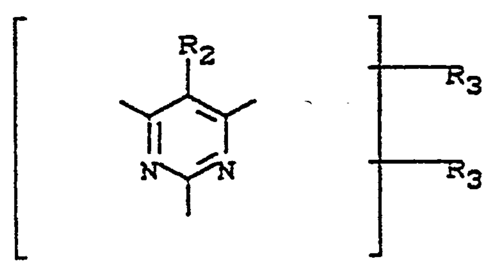

in which
$R_2$ denotes H, halogen, optionally substituted alkyl, alkenyl, $NO_2$, CN, carboxylic acid, carboxylic acid ester, an optionally N-substituted carboxamide or sulphonamide group, a sulphonic acid or sulphonic acid ester group, or an alkylsulphonyl, aralkylsulphonyl or arylsulphonyl group,
$R_3$ denotes H, halogen, optionally substituted alkyl, alkenyl, or an alkylsulphonyl, aralkylsulphonyl or arylsulphonyl group, with the proviso that at least one $R_3$ = F.

7. Dyestuffs of Claims 1–5 with

X = 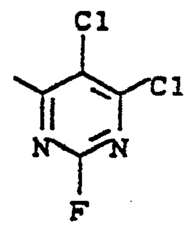 , 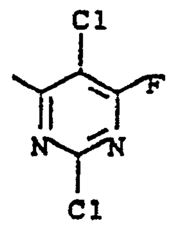 , 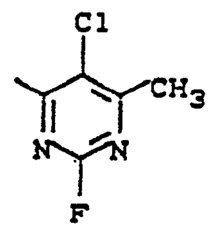 ,

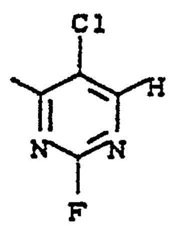 , 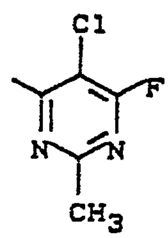 , 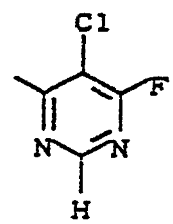 ;

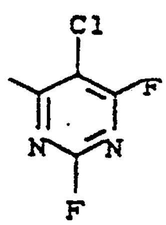 , 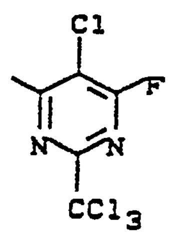

or

X 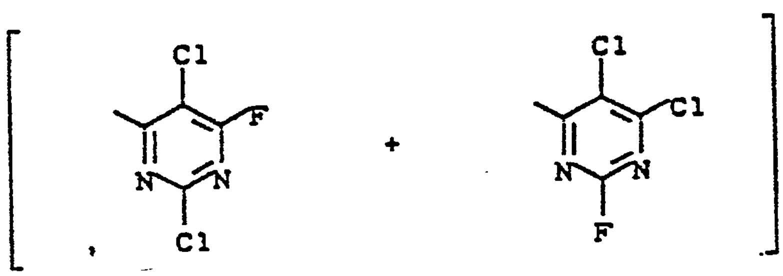

50-80 % 50-20%

8. Use of the dyestuffs of Claims 1–7 for dyeing and printing hydroxyl- or amido-containing materials.
9. Hydroxyl- or amido-containing materials dyed or printed with the dyestuffs of Claims 1–8.

**Revendications**

1. Colorants réactifs azoïques ne contenant pas de métal, de formule

$$X-\underset{R}{\underset{|}{N}}-K-N=N-D-N=N-K-\underset{R}{\underset{|}{N}}-X$$

dans laquelle
K désigne le reste d'un copulant de la série du naphtol, de la pyrazolone ou de la pyridone,
D est un reste de formule

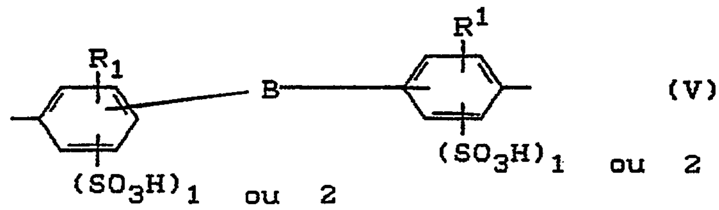

(V)

dans laquelle

$R_1$ représente H, Cl, Br, un groupe alkyle en $C_1$ à $C_4$, alkoxy en $C_1$ à $C_4$, COOH, acylamino; notamment le groupe $-NHCOCH_3$,

B est une liaison directe ou un chaîno de pontage –NH–, –O–, $-(CH_2)_{1-2}$, –CH=CH–, $-OCH_2CH_2O-$, –NR–W–NR– ou

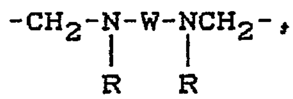

où

W est un groupe –CO– ou un reste bis-acyle, par exemple

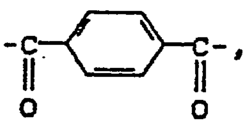, 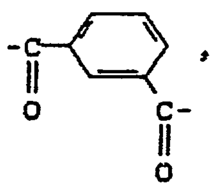, 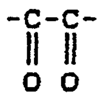, 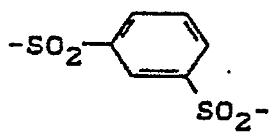

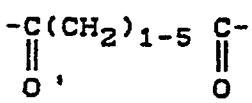, 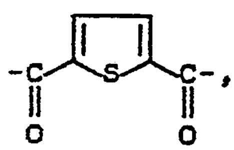, 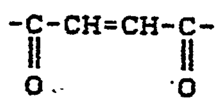

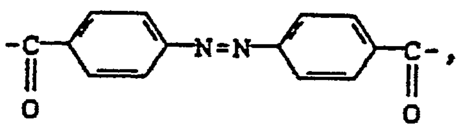, 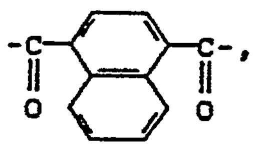,

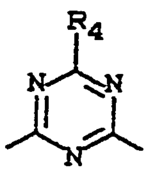

avec

$R_4$ = F, Cl, Br, un groupe alkoxy, notamment un groupe alkoxy en $C_1$ à $C_4$ éventuellement substitué par un radical alkoxy en $C_1$ à $C_4$, un groupe aryloxy, notamment phénoxy, un groupe alkyle en $C_1$ à $C_4$, un groupe amino, notamment $NH_2$, éventuellement substitué, un groupe mono- et di-(alkyle en $C_1$ à $C_4$)amino, un groupe arylamino, un groupe phénylamino éventuellement substitué par Cl, un radical alkyle en $C_1$ à $C_4$, alkoxy en $C_1$ à $C_4$, sulfo, carboxy, ou un groupe N-(alkyle en $C_1$ à $C_4$)-N-(aryl)-amino, un groupe hydroxy,

ou de formule

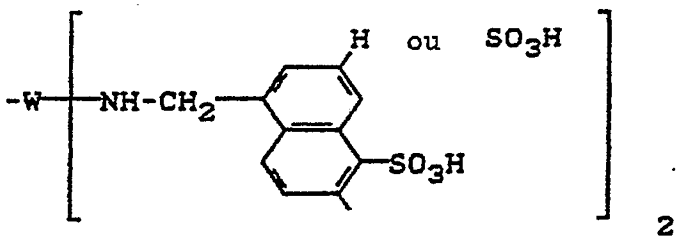

(Va)

dans laquelle
W a la définition indiquée ci-dessus,
X est un reste, réactif envers la fibre, de la série de la pyrimidine, qui contient au moins un atome réactif de fluor,
R représente H ou un groupe alkyle.

2. Colorants suivant la revendication 1, dans lesquels

-K- représente

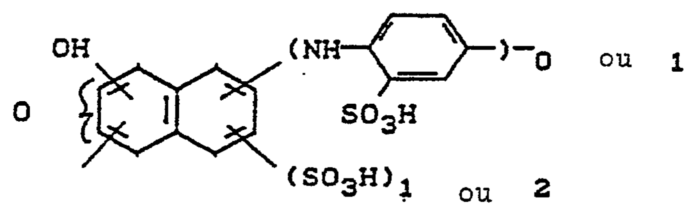

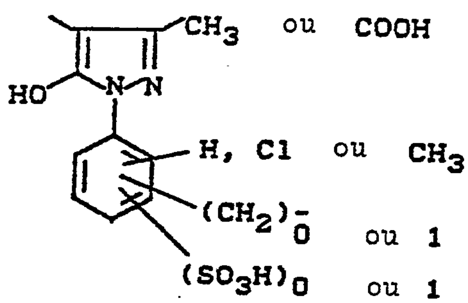

ou

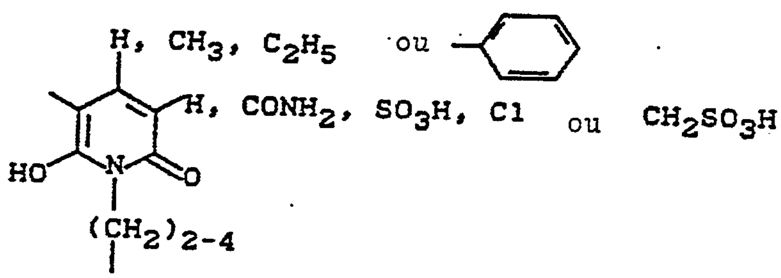

3. Colorants suivant la revendication 1, dans lesquels R représente H.

4. Colorants suivant la revendication 1, de formules

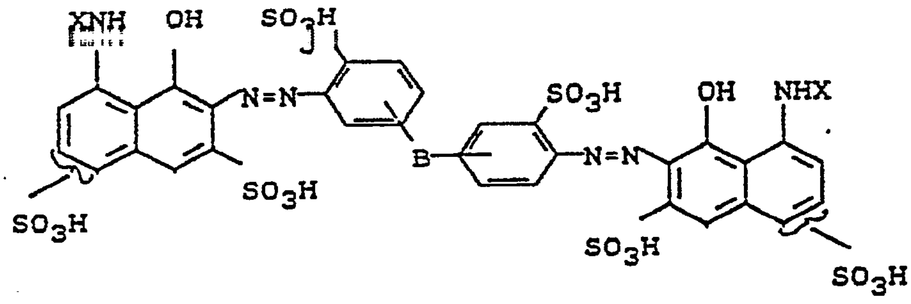

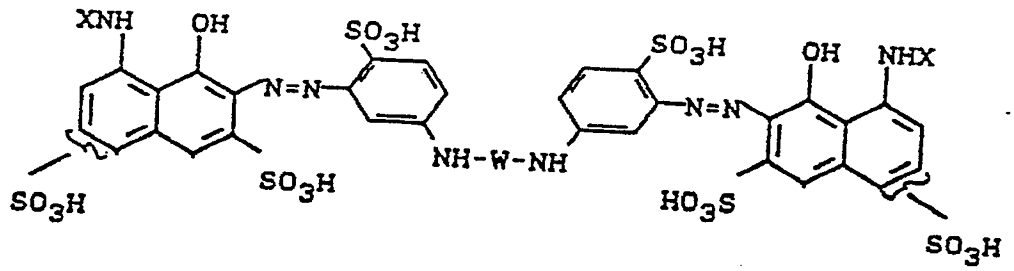

où B et W ont la définition indiquée dans la revendication 1.

5. Colorants suivant les revendications 1 et 4, dans lesquels

W représente -CO-, 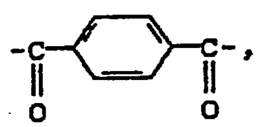, 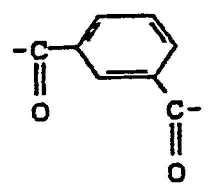,

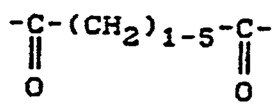 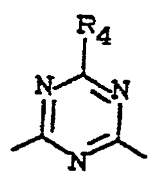

$R_4$ ayant la définition indiquée dans la revendication 1.

6. Colorants suivant les revendications 1 à 5, dans lesquels

X représente 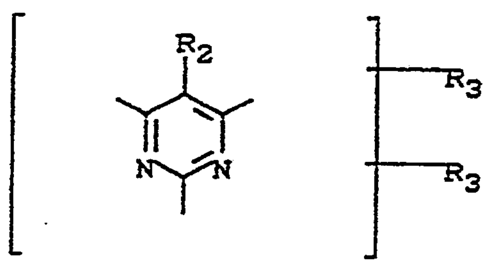

où

$R_2$ représente H, un halogène, un groupe alkyle éventuellement substitué, alcényle, $NO_2$, CN, acide carboxylique, ester d'acide carboxylique, un groupe amide d'acide carboxylique ou amide d'acide sulfonique éventuellement substitué sur l'azote, un groupe acide sulfonique ou ester d'acide sulfonique, un groupe alkylsulfonyle, aralkylsulfonyle, arylsulfonyle,

$R_3$ représente H, un halogène, un groupe alkyle éventuellement substitué, un groupe alcényle, un groupe alkylsulfonyle, aralkylsulfonyle ou arylsulfonyle, sous réserve qu'au moins un groupe $R_3$ représente F.

7. Colorants suivant les revendications 1 à 5, dans lesquels

X représente

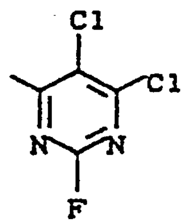
,
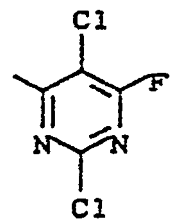
,
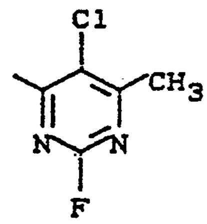
,

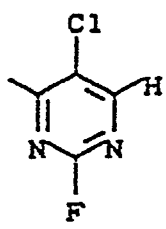
,
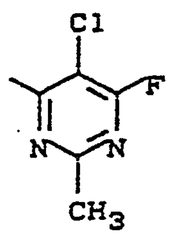
,
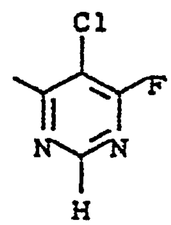
,

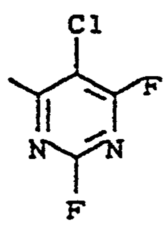
,
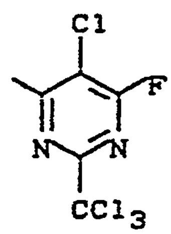

ou

X représente

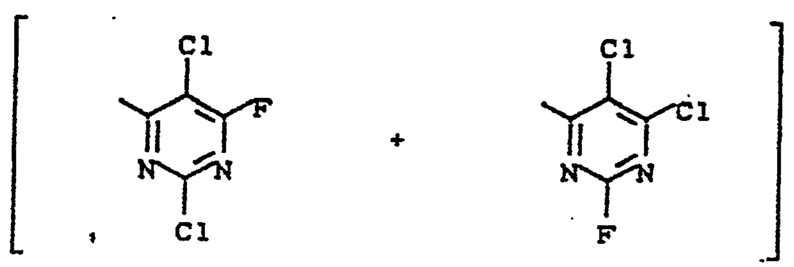

50-80 %　　50-20%

8. Utilisation des colorants suivant les revendications 1 à 6 pour la teinture et l'impression de matières contenant des groupes hydroxyle ou des groupes amide.

9. Matières contenant des groupes hydroxyle ou des groupes amide, teintes ou imprimées avec les colorants suivant les revendications 1 à 7.